Europäisches Patentamt

European Patent Office

Office européen des brevets

(11) Publication number: **0 284 917**
A2

## (12) EUROPEAN PATENT APPLICATION

(21) Application number: **88104312.9**

(22) Date of filing: **18.03.88**

(51) Int. Cl.⁴ **B61D 47/00** , B60P 1/00

(30) Priority: **01.04.87 IT 2130587 U**

(43) Date of publication of application:
**05.10.88 Bulletin 88/40**

(84) Designated Contracting States:
**AT BE CH DE FR GB LI NL SE**

(71) Applicant: **COSTAMASNAGA S.p.A.**
**Via 4 Novembre**
**I-22041 Costamasnaga (Como)(IT)**

(72) Inventor: **Maluta, Sandro**
**Via Enrico Torti 22**
**I-20052 Monza(Milan)(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Goods transportation vehicle arranged for automation of the operations involved in its loading and unloading.**

㊗ A goods transportation vehicle, typically a railway car, trailer truck or articulated truck, comprising a load-holding compartment (3) provided on its opposing inner walls (5) with at least one pair of guides (6) for the longitudinal sliding of goods-support means comprising elements (7) arranged to cooperate with said guides, this cooperation being advantageously implemented automatically.

Fig. 6

EP 0 284 917 A2

## Goods transportation vehicle arranged for automation of the operations involved in its loading and unloading

This invention relates to a vehicle suitable for goods transportation both by road and by rail.

The vehicles (trailer trucks, articulated trucks, railway cars) which are currently used for transporting goods are loaded and unloaded using considerable labour, resulting in increase in the time which these operations take and in their cost.

In addition, for carrying out this work there are few or indeed no usable mechanical or computerised means which would accelerate stawage operations and allow them to be better monitored.

An object of the present invention is to provide a vehicle usable for general goods transportation which is arranged for automation of the aforesaid operations, to thus allow the development of a widely applicable program resulting in goods transportation systems of new concept in terms of type and operation, by extending the advantages of intermodality to satisfy a considerable demand not currently satisfied by intermodal load-carrying units such as containers, mobile boxes and semitrailers.

This and further objects which will be more apparent to an expert of the art are attained by a goods transportation vehicle comprising a load-holding compartment provided on its opposing inner walls with at least one pair of guides for the longitudinal sliding of goods-support platforms which on their sides comprise elements arranged to cooperate with said guides.

At its front and rear ends the vehicle comprises loading doors ex tending over substantially the entire area of these ends, so that when they are open the goods-support means can be easily inserted on the guides.

In particular, the guides can be in the form of ledges projecting from the inner walls of the transportation vehicle or can be of L cross-section, and in either case are disposed along the longer sides of the load holding compartment of the transportation vehicle.

Advantageously, when loaded, the platforms are fixed to the guides by known means, such as bolts passing through holes provided both in the elements and in the guides.

As described in a further patent application in the name of the present applicant, this type of vehicle can be loaded and/or unloaded within completely automated systems connected by conveyor means to the end of a production line or warehouse. Thus in the case of vehicle loading, from the production line the goods arrive, already arranged on the load-carrying platforms, at a station of said system where they are inserted into the transportation vehicle. After being unloaded at their destination, the platforms used for carrying the goods are returned to the loading system. In this manner they can be used again for subsequent transportation.

The present invention will be more apparent from the accompanying drawings in which:

Figure 1 is a side view of a railway car according to the present invention, showing the goods-support means in transparent form;

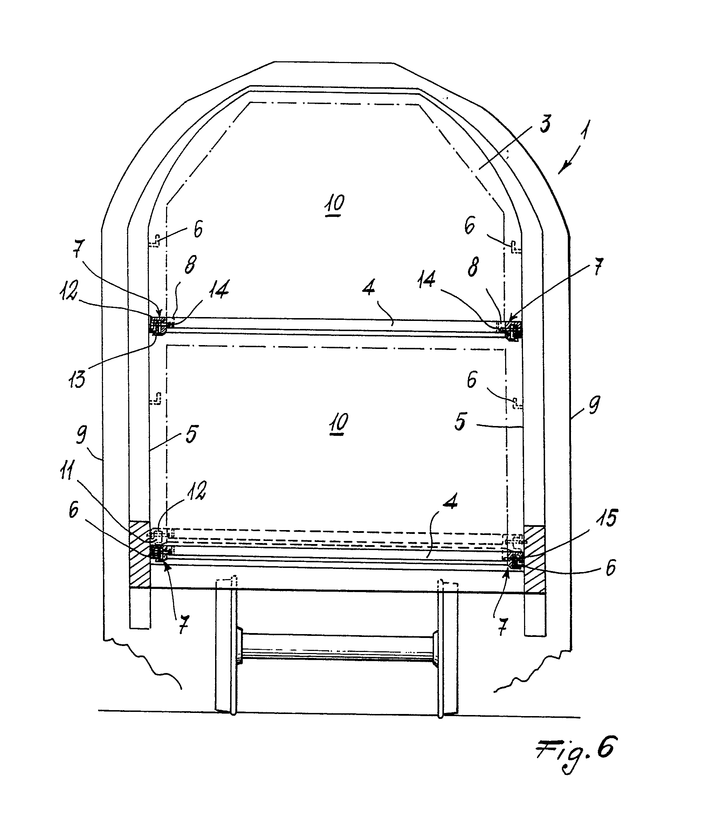

Figure 2 is a front view of Figure 1;

Figure 3 is a plan view of the car of Figure 1;

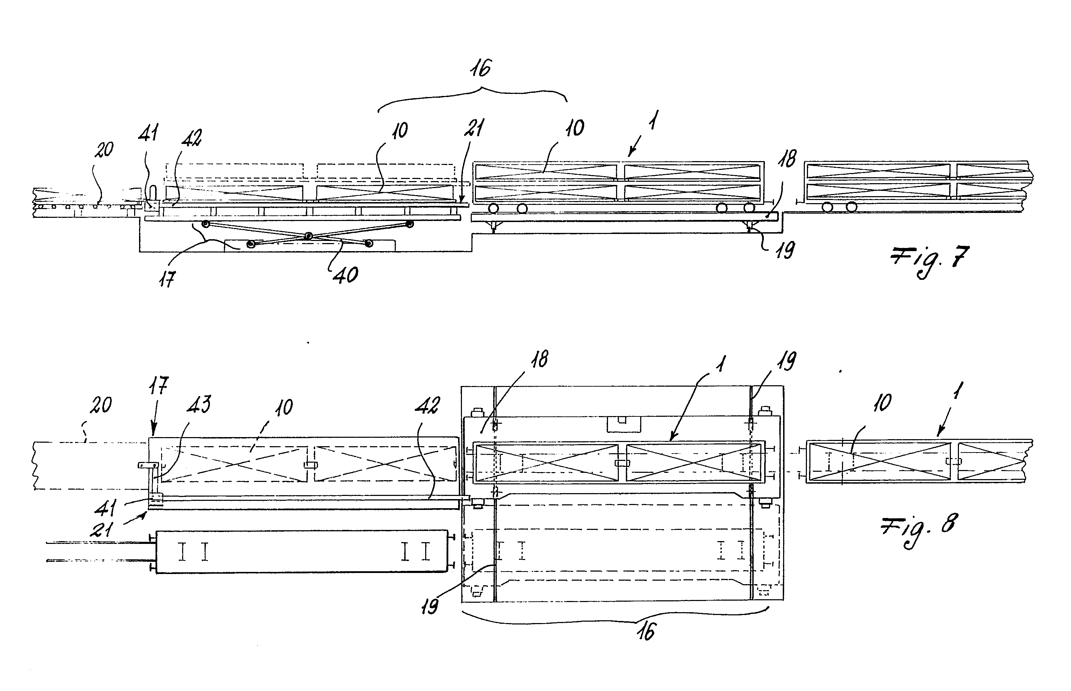

Figure 4 is a side view of a road truck according to the present invention, showing the goods-support means in transparent form;

Figure 5 is a section on the line V-V of Figure 4;

Figure 6 is a diagrammatic view of the car of Figure 1 with some parts shown in section;

Figure 7 is a schematic example of a stage in the loading of the car of Figure 1;

Figure 8 is a diagrammatic example of a loading section for railways cars within an automated loading and/or unloading system.

With reference to the figures, a railway car 1 and an articulated truck 2 comprise a load holding compartment 3 of dimensions such as to be able to receive in the lengthwise direction two or, respectively, one goods-support means, defined typically by a loading platform 4.

On its longer sides 5, the load holding compartment 3 comprises guides 6 arranged to cooperate with elements 7 (such as wheels, rollers or slide shoes constructed of a material of low coefficient of friction) disposed on the longer sides 8 of the platforms 4.

With particular reference to the use of the railway car 1 as a goods transportation vehicle, its load holding compartment 3 will be defined by its actual walls. Said load holding compartment can be divided into several parts able to receive platforms 4 on said guides 6.

Said guides 6 are positioned or positionable at different heights, to enable several superposed platforms 4 to be inserted into the load holding compartment 3 in accordance with the dimensions of the goods 10 carried by them.

In said figures, the guides 6 are of L-shape and cooperate with suitably shaped elements 7 on the platforms 4. Said elements 7 comprise a cavity 11 delimited by flanges 12 and 13, and in which the guide 6 slides. Said guides can also be of roller or wheel type.

To enable the platforms 4 to be securely fixed on the guides 6, bolts 14 are provided, cooperating with holes 15 present both in the elements 7 and in the guides 6.

The platforms 4 carrying the goods 10 are inserted into the cars 1 in an automated manner within systems 16, which are described in detail in a further patent application in the name of the present applicant, they comprising a loading unit 17, a mobile table 18 slidable on guides 19 transversely to the axis of the railway car 1, and conventional conveyor means 20 which convey the platforms 4 carrying goods, for example from a production line.

The loading units 17 are mobile in the sense that they can be moved vertically, for example by the scissor assembly 40. Said units 17 comprise means 21 which move the platforms 4 in a translational manner along the unit and insert the platforms into the load holding compartment 3. Specifically, the means 21 comprise a block 41 slidable on a guide 42 and possessing engagement means 40 cooperating with corresponding parts present on the platforms 4.

The mobile table 18 allows the car 1 to be moved into a position in front of the loading unit 17.

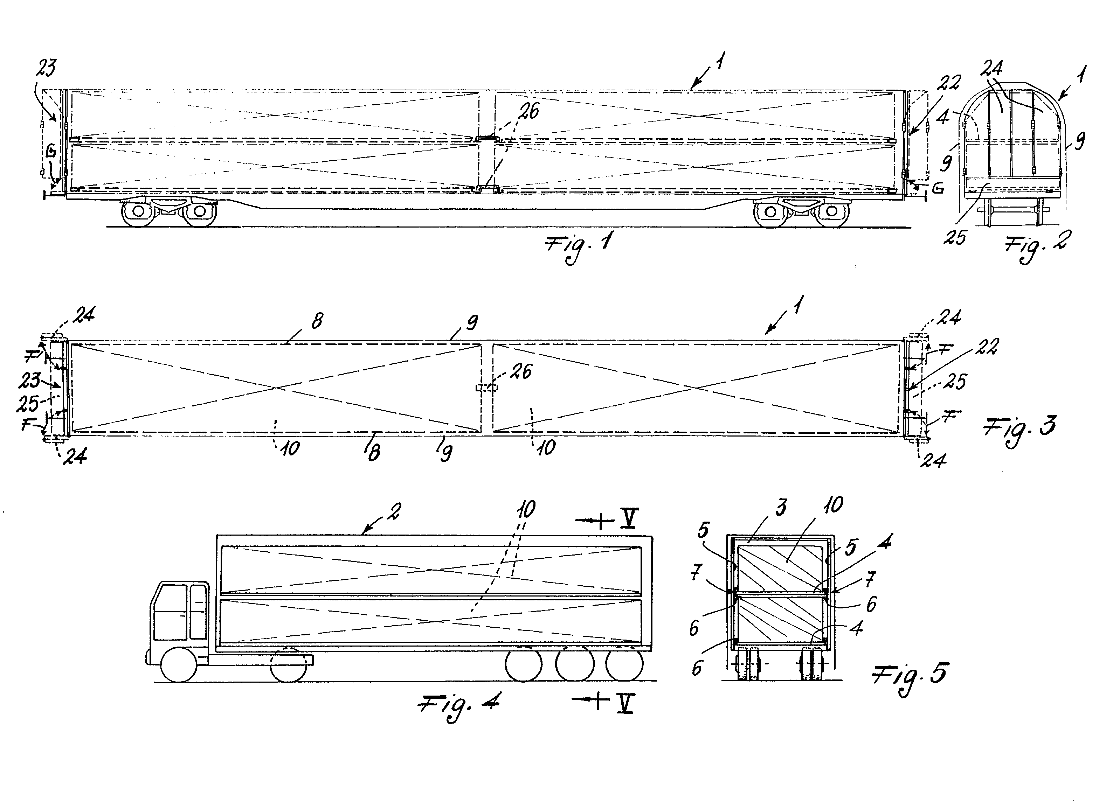

The goods 10 carried on the platforms 4 are inserted into the car 1 from the front end 22 or rear end 23 of the car 1. For this purpo se, said ends comprise vertical doors 24 and a lower horizontal door 25 which covers them, these doors, which open in the direction of the arrows F and G of Figures 1 and 3, allowing better use of the volume of the loading holding compartment 3.

Having correctly positioned the platforms 4 carrying the goods 10 in front of the load holding compartment 3 by moving the loading unit 17, said platforms are slid along said unit by the means 21 supported by it and positioned agaisnt the end of the guides 6.

At this point the platform elements 7 enter into cooperation with the guides 6 and the platforms are inserted into the load holding compartment 3, again by the action of the means provided on the loading unit.

Advantageously two platforms 4 can be connected by engagement means 26 and then inserted into the railway car 1.

## Claims

1. A goods transportation vehicle, typically a railway car, trailer truck or articulated truck, characterised by comprising a load--holding compartment (3) provided on its opposing inner walls (5) with at least one pair of guides (6) for the longitudinal sliding of goods-support means comprising elements (7) arranged to cooperate with said guides (6), this operation being advantageously implemented automatically.

2. Vehicles as claimed in claim 1, characterized in that said guides (6) are disposed on the longer sides of the load holding compartment (3).

3. Vehicles as claimed in claim 1, characterized in that the goods support means are platforms (4).

4. Vehicles as claimed in claim 1, characterized in that the elements (7) cooperating with the guides (6) are disposed along the longer sides (8) of the platforms (4), said elements comprising tracks arranged to cooperate with the guides (6).

5. Vehicles as claimed in claim 1, characterized by comprising vertical doors (24) and horizontal doors (25) which substantially close the ends (22, 23) of the cars (1).

Fig. 1

Fig. 2

Fig. 3

Fig. 4

Fig. 5

Fig. 6

Fig. 7

Fig. 8